# EUROPÄISCHE PATENTANMELDUNG

(11) **EP 0 684 746 A2**
(43) Veröffentlichungstag der Anmeldung: **29.11.1995**
(21) Anmeldenummer: 95104975.8
(22) Anmeldetag: 03.04.1995
(51) Int. Cl.: H04Q 7/38, H04L 27/22

(54) **Verfahren und Anordnung zum Übertragen von Rufinformationen in einem Mobilfunksystem**

(30) Priorität: 03.05.1994 DE 4415564
(71) Anmelder: SIEMENS AKTIENGESELLSCHAFT, D-80333 München (DE)
(72) Erfinder: Daubmeier, Gerhard, Dipl.-Ing., D-82110 Germering (DE)

(57) **Zusammenfassung**

Zum Übertragen von Rufinformationen (R) in einem Mobilfunksystem mit mindestens einer Zentralstelle (SSS, RSS) und einer Vielzahl von Mobilstationen (MS) wird ein im Mobilfunksystem vorgesehener, an sich bekannter, Kurzmitteilungsdienst (Short Message Service) verwendet, um die Rufinformationen (R) über einen Signalisierungskanal und ohne die Verwendung von Verkehrskanälen zu einer Mobilstation (MS) zu übertragen. Dadurch kann ein bekanntes Mobilfunksystem auch als Personenrufsystem (Pagersystem) verwendet werden. Entsprechende Mobilstationen (MS) weisen keine für eine Sprachkommunikation vorgesehene Baueinheiten, wie Mikrophon (M) oder Hörkapsel (H) auf. Ebenso kann auf eine Wähltastatur (T) verzichtet werden.

## Beschreibung

Die Erfindung bezieht sich auf ein Verfahren und Anordnung zum Übertragen von Rufinformationen in einem Mobilfunksystem. Weiterhin bezieht sich die Erfindung auf eine entsprechende Zentralstation und eine Mobilstation des Mobilfunksystems. Die Erfindung eignet sich insbesondere für die Verwendung im digitalen zellularen pan-europäische Mobilfunksystem GSM (Global System for Mobile Communication).

Es ist allgemein bekannt, eine Person mittels drahtloser Personenrufsysteme, die auch unter der Bezeichnung Pagersysteme bekannt sind, rufen zu lassen. Hierzu ist jedoch für jedes Personenrufsystem eine eigene Infrastruktur erforderlich. In den verschiedenen Ländern haben sich darüber hinaus unterschiedliche Personenrufsysteme durchgesetzt, die jeweils andere Infrastrukturen und andere Prozeduren erfordern. Daraus ergibt sich, daß eine mit einer Empfangseinheit für ein Personenrufsystem ausgerüstete Person über ein anderes Personenrufsystem, beispielsweise in einem anderen Land nicht gerufen werden kann. Über das Personenrufsystem können auch kurze Rufinformationen, wie z.B. eine anzurufende Teilnehmernummer, übertragen werden.

Zum Rufen einer Mobilstation in einem Mobilfunksystem, beispielsweise dem bekannten digitalen Mobilfunksystem GSM, ist es weiterhin allgemein bekannt, einen Rufkanal zu verwenden, der als Rundrufkanal (Broadcast Channel) ausgebildet ist und von einer Zentralstelle ausgeht. Wenn die gerufene Mobilstation den Ruf empfängt, sendet diese auf einem Zugriffskanal (Random Access Channel) eine Rufbestätigung an die Zentralstelle zurück. Anschließend wird die Verbindung zwischen der Zentralstelle und der Mobilstation auf Signalisierungskanälen und Verkehrskanälen hergestellt, um die gewünschte Kommunikation durchzuführen. Für einen reinen Personenruf wäre es verhältnismäßig aufwendig, die Verkehrskanäle des Mobilfunksystems zu benutzen, nur um eine Rufinformation an eine Mobilstation abzusetzen.

Der Erfindung liegt daher die Aufgabe zugrunde, ein Verfahren und eine Anordnung zum Übertragen von Rufinformationen in einem Mobilfunksystem anzugeben, die auf einfache Weise zu realisieren sind. Weiterhin liegt der Erfindung die Aufgabe zugrunde, eine für die Durchführung des Verfahrens geeignete Zentralstelle und eine entsprechende Mobilstation anzugeben.

Erfindungsgemäß wird die Aufgabe bei dem Verfahren der eingangs genannten Art durch die im kennzeichnenden Teil des Patentanspruchs 1 angegebenen Merkmale gelöst. Eine Anordnung gemäß der Erfindung ist im Patentanspruch 5 angegeben. Eine geeignete Zentralstelle und eine entsprechende Mobilstation sind im Patentanspruch 7 bzw. 8 angegeben.

Die Erfindung eignet sich insbesondere für das Mobilfunksystem GSM, das sich in den letzten Jahren in vielen Ländern, insbesondere in europäischen Ländern, durchgesetzt hat. Bei diesem Mobilfunksystem kann über die Signalisierungskanäle ein unter der Bezeichnung Short Message Service bekannter Kurzmitteilungsdienst abgewickelt werden. Dieser Kurzmitteilungsdienst wird gemäß der Erfindung dazu benutzt, Rufinformationen zu einer Mobilstation zu übertragen.

Gemäß der vorliegenden Erfindung kann die Infrastruktur eines eingeführten Mobilfunksystems für das Übertragen von Rufinformationen mitverwendet werden. Das Bereitstellen einer weiteren Infrastruktur für ein Personenrufsystem ist somit nicht erforderlich. Im Gegensatz zu den üblichen Rufsystemen kann eine Person auch international, beispielsweise in ganz Europa gerufen werden.

Da bei einem Kurzmitteilungsdienst für eine Punkt-zu-Punkt-Verbindung von der Mobilstation ein Quittungssignal an die für die Behandlung des Kurzmitteilungsdienstes vorgesehene Verarbeitungseinheit zurückgeschickt wird, kann, im Gegensatz zu den bekannten Personenrufsystemen sogar eine Bestätigung erhalten werden, daß eine Rufinformation empfangen worden ist.

Vorteilhafte Ausgestaltungen der Erfindung ergeben sich aus den Unteransprüchen.

Ein Ausführungsbeispiel der Erfindung wird im folgenden anhand von Zeichnungen näher erläutert. Es zeigen:
Fig. 1 ein Blockbild eines Mobilfunksystems, und
Fig. 2 ein Blockbild einer Mobilstation.

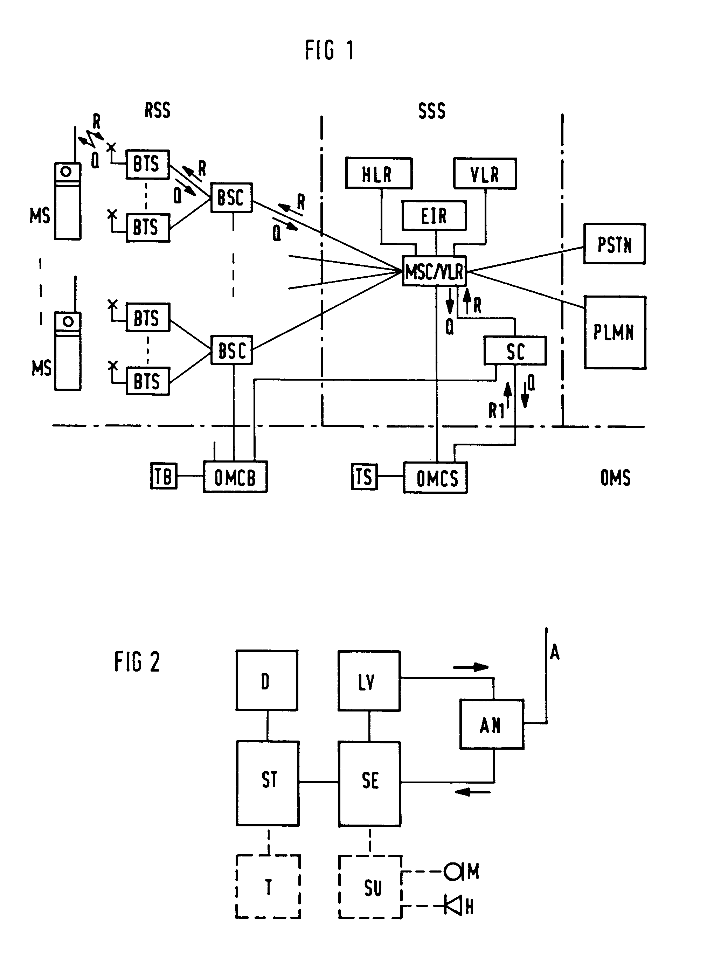

Der in Fig. 1 dargestellte Teil eines Mobilfunksystems ist auf der Basis eines elektronischen Vermittlungssystems entsprechend dem bekannten digitalen zellularen pan-europäische Mobilfunksystem GSM (Global System for Mobile Communication) ausgebildet. Er enthält ein Vermittlungssystem (Switching Subsystem) SSS, ein Funksystem (Radio Subsystem) RSS, und ein Bedien- und Wartungssystem (Operation and Maintenance System) OMS. Das Vermittlungssystem SSS stellt die Verbindung zwischen dem Funksystem RSS und einem öffentlichen Telefonnetz PSTN, beispielsweise einem ISDN-Netz, oder mit einer anderen Vermittlungsstelle des selben oder eines anderen Mobilfunknetzes PLMN her. Das Funksystem RSS wird eingeteilt in Basisstationen BSS und mehrere Mobilstationen MS. Die Basisstationen BSS stellen alle Funktionen zur Verfügung, die erforderlich sind, um eine Funkdeckung von Zellen zu gewährleisten und die Mobilstationen MS stellen Funktionen für die Teilnehmer bereit. Jede Basisstation BSS umfaßt eine Basisstationssteuerung BSC, die alle Funktionen für die Funkübertragung durchführt, lokale Vorgänge Verarbeitet und Wartungsfunktionen ausführt und eine oder mehrere Basisfunkstationen BTS. Eine Basisstationssteuerung BSC verwaltet eine Vielzahl von Basisfunkstationen BTS. Die Basisfunkstationen BTS führen alle funktechnischen Funktionen aus und sie unterstützen die Funkschnittstelle zu den Mobilstationen MS. Eine Basisfunkstation BTS versorgt eine oder mehrere Zellen. Ein derartiges System ist beispielsweise in einer Broschüre "D 900 Mobile Communication System" SYD der Siemens AG beschrieben.

Das Vermittlungssystem SSS enthält neben einer Mobilfunk-Vermittlungsstelle MSC (Mobile Services Switching Center) noch weitere Einheiten, wie eine mit dieser verbundene Heimatdatei HLR, in der Daten von dort registrierten Mobilstationen MS gespeichert sind, eine Besucherdatei VLR, die Informationen über diejenigen Mobilstationen MS, die sich gerade in der jeweiligen Besucherdatei-Fläche befinden und ein Geräte-Identifizierungsregister EIR.

Das Bedien- und Wartungssystem OMS wird aus einem oder mehreren Bedien- und Wartungseinheiten OMC gebildet. Beispielsweise ist eine Bedien- und Wartungseinheit OMCS für die Bedienung und Wartung der Vermittlungsstelle MSC zuständig und eine andere Bedien- und Wartungseinheit OMCB ist für das Funksystem RSS, insbesondere für die Basisstationssteuerung BSC zuständig.

Mit der Vermittlungsstelle MSC ist weiterhin eine Verarbeitungseinheit für Kurzmitteilungen (Short Message Service Center) SC verbunden. Diese Verarbeitungseinheit SC ist für die Durchführung des im GSM vorgesehenen Kurzmitteilungsdienstes (Short Message Service) vorhanden.

Dieser Kurzmitteilungsdienst benutzt die Signalisierungskanäle des Mobilfunksystems, so daß für diesen Zweck keine teuren Verkehrskanäle belegt werden müssen. Im Falle der Nichterreichbarkeit der Mobilstation MS werden in der Heimatdatei HLR oder der Besucherdatei VLR Rufdaten abgelegt, die nach einer Wiedereinbuchung der Mobilstation MS in das Mobilfunknetz als Kurzmitteilungen zu dieser übertragen werden. Je nach Funktionalität in der Verarbeitungseinheit SC kann auch eine zyklische Zustellungswiederholung durchgeführt werden. Einzelheiten des Kurzmitteilungsdienstes sind in den GSM-Spezifikationen Rec. 03.40 und 04.11 beschrieben.

Falls eine Person mittels einer Rufinformation R gerufen werden soll, wird diese der Verarbeitungseinheit SC zugeführt. Diese Rufinformation R kann bei dem bekannten Kurzmitteilungsdienst derzeit bis zu 140 Zeichen umfassen. Die Rufinformation R kann beispielsweise eine Rufnummer, die von einem Teilnehmer angerufen werden soll und/oder eine kurze Nachricht enthalten, die nach dem Empfang an der Mobilstation MS ausgebbar ist. Soll beispielsweise im Fall eines in der Vermittlungsstelle MSC auftretenden Fehlers eine Wartungsperson gerufen werden, wie es in der gleichzeitig eingereichten Patentanmeldung P (GR 94 E 1316) beschrieben ist, werden die entsprechenden Rufdaten R1 zur Verarbeitungseinheit SC übertragen und die Verarbeitungseinheit SC veranlaßt dann das Rufen der Wartungsperson über das Mobilfunksystem.

Die Rufinformation R wird in bekannter Weise über die Vermittlungsstelle MSC und das Funksystem RSS zur Mobilstation MS der gerufenen Person übertragen. Zunächst wird die Mobilstation MS in bekannter Weise in dem Funkbereich, in dem sie sich zuvor eingebucht hat über den Rundrufkanal (Broadcast Channel) gerufen. Anschließend meldet sie sich über einen Zugriffskanal (Random Access Channel) bei der rufenden Vermittlungsstelle MSC. Nach der Zuweisung mindestens eines Signalisierungskanals und mindestens eines Verkehrskanals wird dann die Rufinformation R zur Mobilstation MS übertragen. Die Benutzung eines Verkehrskanals ist dabei jedoch nicht erforderlich, da keine eigentliche Sprach- oder Datenkommunikation zwischen der Basisstation BTS und der Vermittlungsstelle MSC erfolgt. Vorzugsweise sind die entsprechenden, für die eigentliche Sprach- oder Datenkommunikation erforderlichen Einheiten in der Mobilstation MS überhaupt nicht vorgesehen.

Nach dem Empfang der Rufinformation R in der Mobilstation MS sendet diese ein Quittungssignal Q über das Funksystem RSS und die Vermittlungsstelle MSC an die Verarbeitungseinheit SC zurück.

Die in Fig. 2 dargestellte Mobilstation MS entspricht in ihrem Aufbau weitgehend einer bekannten Mobilstation MS für das Mobilfunksystem GSM. Da jedoch keine Sprach- oder Datenkommunikation zwischen den Teilnehmern erfolgt, sind das Mikrophon M und die Hörkapsel H und die zugeordneten Schaltkreise, wie entsprechende Verstärker und ein Sprachcodierer oder ein Sprachdecodierer, die in einem Sprachumsetzer SU angeordnet wären, nicht erforderlich. Da von der Mobilstation MS auch keine Wahl eines anderen Teilnehmers erfolgt, sind auch eine numerische Tastatur T und die zugeordneten Schaltkreise dann nicht erforderlich.

Durch das Fehlen der genannten Baueinheiten in der Mobilstation MS kann diese sehr kostengünstig ausgebildet werden. Da weniger Bauteile erforderlich sind, ist auch die Bereitschaftsdauer bei gleicher Batterieladung wesentlich größer als bei einer vollständigen Mobilstation MS für Sprach-oder Datenkommunikation mit beliebigen Teilnehmern.

Wie es in Fig. 2 dargestellt ist, weist die Mobilstation MS eine an eine Anpassungseinheit AN angeschlossene Antenne A auf. Mit der Anpassungseinheit ist einerseits eine Sende/Empfangseinheit SE für die von der Antenne A empfangenen Signale direkt und andererseits für die über die Antenne A auszusendenden Signale über einen Leistungsverstärker LV verbunden. An der Sende/Empfangseinheit SE ist auch eine zentrale Steuereinheit ST angeschlossen, die den Ablauf aller Funktionen in der Mobilstation MS steuert. Die für den Empfang der Rufinformationen R nicht erforderlichen Teile der Mobilstation MS sind in Fig. 2 gestrichelt dargestellt. Diese Teile sind insbesondere die Wähltastatur T, und die über einen Sprachumsetzer SU angeschossenen Spracheingabe/-ausgabeinheiten, wie das Mikrophon M und die Hörkapsel H.

Die Rufinformation R wird an einer Ausgabeeinheit D ausgegeben, die in der Regel als eine Anzeigeeinheit ausgebildet ist. Gleichzeitig mit dem Eintreffen einer Rufinformation R kann jedoch auch ein optisches und/oder akustisches Signal ausgegeben werden.

Es ist auch möglich, auf Wunsch die Rufinformation R durch synthetisierte Sprache auszugeben. In diesem Fall sind an der Steuerung ST ein Vocoder und ein Lautsprecher angeschlossen.

## Patentansprüche

1. Verfahren zum Übertragen von Rufinformationen in einem Mobilfunksystem mit mindestens einer Zentralstelle (SSS, RSS) und einer Vielzahl von Mobilstationen (MS),
dadurch gekennzeichnet,
daß nach dem Herstellen einer Verbindung zwischen der Zentralstelle (SSS, RSS) und einer Mobilstation (MS) ein im Mobilfunksystem vorgesehener, an sich bekannter, Kurzmitteilungsdienst, bei dem Informationen über einen Signalisierungskanal und ohne die Verwendung von Verkehrskanälen zu einer Mobilstation (MS) übertragen werden, für die Übertragung der Rufinformationen (R) verwendet wird.

2. Verfahren nach Anspruch 1,
dadurch gekennzeichnet,
daß für die Übertragung der Rufinformationen (R) der unter der Bezeichnung Short Message Service bekannte Kurzmitteilungsdienst des als GSM bekannten Mobilfunksystems verwendet wird.

3. Verfahren nach einem der vorangehenden Ansprüche,
dadurch gekennzeichnet,
daß für die Ausgabe der Rufinformationen (R) eine übliche Mobilstation (MS) verwendet wird, bei der die für die eigentliche Sprach- oder Datenkommunikation erforderlichen Einheiten (T, M, H) mindestens teilweise nicht vorhanden sind.

4. Verfahren nach einem der Ansprüche 1 bis 3,
dadurch gekennzeichnet,
daß für die Ausgabe der Rufinformationen (R) eine Mobilstation (MS) verwendet wird, die nur für die Übertragung des Kurzmitteilungsdienstes geeignet ist.

5. Anordnung zum Übertragen von Rufinformationen in einem Mobilfunksystem mit mindestens einer Zentralstelle (SSS, RSS) und einer Vielzahl von Mobilstationen (MS),
dadurch gekennzeichnet,
daß eine im Mobilfunksystem vorgesehene Zentralstelle (SSS, RSS) und die Mobilstationen (MS) derart ausgebildet sind, daß nach dem Herstellen einer Verbindung zwischen der Zentralstelle (SSS, RSS) und einer Mobilstation (MS) bei einer Übertragung von Rufinformationen (R) nur der für einen an sich bekannten Kurzmitteilungsdienst vorgesehene Signalisierungskanal benutzt wird und daß keine Sprach-oder Datenkommunikation zwischen der Zentralstelle (SSS, RSS) und der Mobilstation (MS) über Verkehrskanäle erfolgt.

6. Anordnung nach Anspruch 5,
dadurch gekennzeichnet,
daß die Mobilstation (MS) derart ausgebildet ist, daß sie nur die für die vollständige Durchführung des Kurzmitteilungsdienstes erforderlichen Baueinheiten (A, AN, LV, SE, ST, D) enthält.

7. Zentralstelle zum Übertragen von Rufinformationen zu Mobilstationen (MS) eines Mobilfunksystems,
dadurch gekennzeichnet,
daß die Zentralstelle (SSS, RSS) eine Verarbeitungseinheit (SC) für den Kurzmitteilungsdienst enthält und derart ausgebildet ist, daß sie nach dem Herstellen einer Verbindung zu einer Mobilstation (MS) über einen Signalisierungskanal und ohne Verwendung eines Verkehrskanals die Rufinformationen (R) zu der Mobilstation (MS) überträgt.

8. Mobilstation eines Mobilfunksystems, bei dem von einer Zentralstelle (SSS, RSS) zur Mobilstation (MS) Rufinformationen (R) übertragen werden,
dadurch gekennzeichnet,
daß die Mobilstation (MS) im wesentlichen nur die für die vollständige Durchführung eines an sich bekannten Kurzmitteilungsdienstes erforderlichen Baueinheiten (A, AN, LV, SE, ST, D) aufweist und keine Baueinheiten (M, H, T) für eine eigentliche Sprach- oder Datenkommunikation enthält.
